# EUROPEAN PATENT SPECIFICATION

(11) **EP 1 167 824 B1**
(45) Date of publication and mention of the grant of the patent: **07.02.2007**
(21) Application number: 01113814.6
(22) Date of filing: 06.06.2001
(51) Int. Cl.: F16H 48/14

(54) **Differential device**
Differentialgetriebe
Mécanisme différentiel

(30) Priority: 21.06.2000 JP 2000191065
(43) Date of publication of application: 02.01.2002
(73) Proprietor: HONDA GIKEN KOGYO KABUSHIKI KAISHA, Minato-ku, Tokyo (JP)
(72) Inventor: Tsukada, Yoshiaki, K.K. Honda Gijutsu Kenkyusho, Wako-shi, Saitama (JP); Furuta, Shinji, K.K. Honda Gijutsu Kenkyusho, Wako-shi, Saitama (JP); Nakamura, Kazuhiko, K.K. Honda Gijutsu Kenkyusho, Wako-shi, Saitama (JP)
(74) Representative: Liska, Horst

(56) References cited:
- EP-A- 0 773 390
- DE-C- 391 583

## Description

The present invention relates to a differential device with a differential limiting function, and more particularly to a differential device having a pair of output rotary members, a holder member having a plurality of radially extending guide holes and disposed between the output rotary members, and a plurality of rolling bodies accommodated respectively in the guide holes, disposed between the output rotary members, and engaging in cam grooves defined in the output rotary members.

One conventional differential device of the type described above is known from Japanese Patent Registration No. 2980532, for example. In the known differential device, a pair of output rotary members is housed in a case that is coupled relatively nonrotatably to a holder member. The case limits the output rotary members against movement away from each other. Power is inputted to the case that serves as an input rotary member.

In the conventional structure, the output rotary members, the holder member, and the rolling bodies are housed in the case which can be brought into contact with outer surfaces of the output rotary members. With the conventional structure, however, the differential device is necessarily large in size, weight, and cost, and it is difficult to supply oil to sliding surfaces because they are covered with the case. EP-A-0 773 390 (JP-B2-02980532) shows the features of the preamble of claim 1.

The present invention has been made in view of the above problems. It is an object of the present invention to provide a differential device which does not require a case for limiting output rotary members against movement away from each other, is of a compact size, a small weight, and a low cost, and makes it easy to supply oil to sliding surfaces.

To achieve the above object, there is provided in accordance with an invention defined in claim 1 a differential device having a pair of output rotary members rotatable about one axis with respect to each other, a holder member disposed between the output rotary members for rotation with an input rotary member and having a plurality of radially extending guide holes, and a plurality of rolling bodies accommodated respectively in said guide holes and disposed between said output rotary members, said output rotary members having cam grooves continuously extending in the circumferential direction of the output rotary members, said rolling bodies engaging in said cam grooves, said cam grooves being of such a shape that said rolling bodies move reciprocally along said guide holes when a rotational speed difference is developed between the output rotary members, characterized in that a restrictive shaft for limiting said output rotary members against axial movement away from each other is disposed coaxially with the output rotary members and has axially opposite ends supported by said output rotary members.

With the above arrangement, the restrictive shaft which is disposed coaxially with the output rotary members and has its axially opposite ends supported by said output rotary members limits said output rotary members against axial movement away from each other. Therefore, a conventional case which would cover the output rotary members is not required. The differential device is thus of a compact size, a small weight, and a low cost. As sliding surfaces are not covered, oil can easily be supplied to the sliding surfaces.

According to an invention defined in claim 2, in the invention defined in claim 1, said output rotary members comprise, as respective integral assemblies, disk members having said cam grooves, respectively, and disposed coaxially with each other with said holder members interposed therebetween, cylindrical members having proximal ends coaxially joined to central regions of said disk members and extending away from each other, and engaging flanges disposed on inner surfaces of middle portions of said cylindrical members, said restrictive shaft extending coaxially through said holder members and said disk members and having opposite ends engaged radially inwardly by said engaging flanges and disposed inwardly of distal ends of said cylindrical members. With this arrangement, it is possible to couple drive axles connected to drive wheels to the distal ends of the cylindrical members of the output rotary members. Thus, the cylindrical members can be used in the same manner as the output shafts of conventional differential devices, and hence are compatible for attachment with the conventional differential devices.

According to an invention defined in claim 3, in the invention defined in claim 1, said restrictive shaft has an end integrally and coaxially joined to one of said output rotary members and an opposite end inserted and supported relatively rotatably in the other of said output rotary members and engaged radially inwardly by said other output rotary member. With this arrangement, since the restrictive shaft is integrally formed with one of the output rotary members, the number of parts used is reduced.

Embodiments of the present invention will be described below with reference to the accompanying drawings.
FIG. 1 is a transverse cross-sectional view of a differential device according to a first embodiment of the present invention;
FIG. 2 is a cross-sectional view taken along line 2 - 2 of FIG. 1;
FIG. 3 is a cross-sectional view taken along line 3 - 3 of FIG. 1;
FIG. 4 is a cross-sectional view taken along line 4 - 4 of FIG. 1;
FIG. 5 is a view showing the relative layout of guide holes, rolling bodies, and cam grooves;
FIG. 6 is a transverse cross-sectional view of a differential device according to a second embodiment of the present invention; and
FIG. 7 is a transverse cross-sectional view of a differential device according to a third embodiment of the present invention.

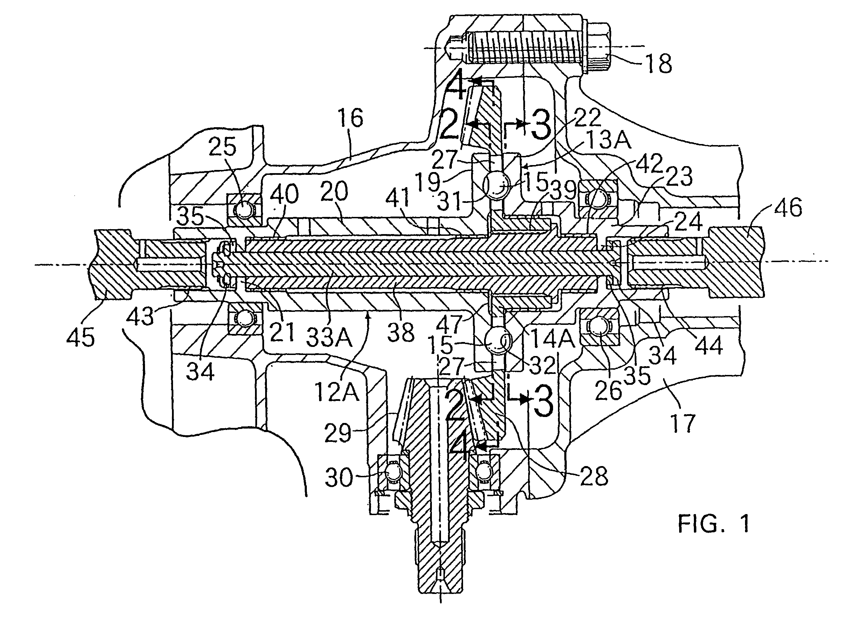

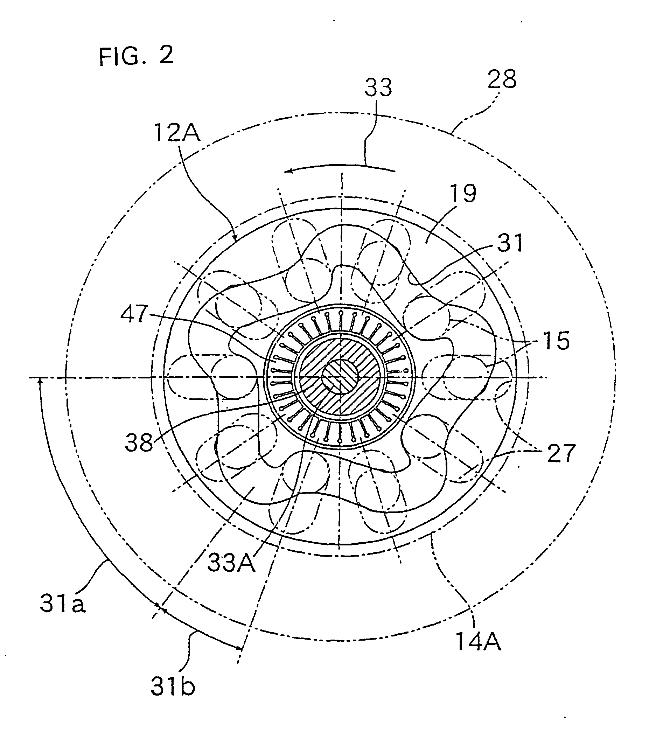

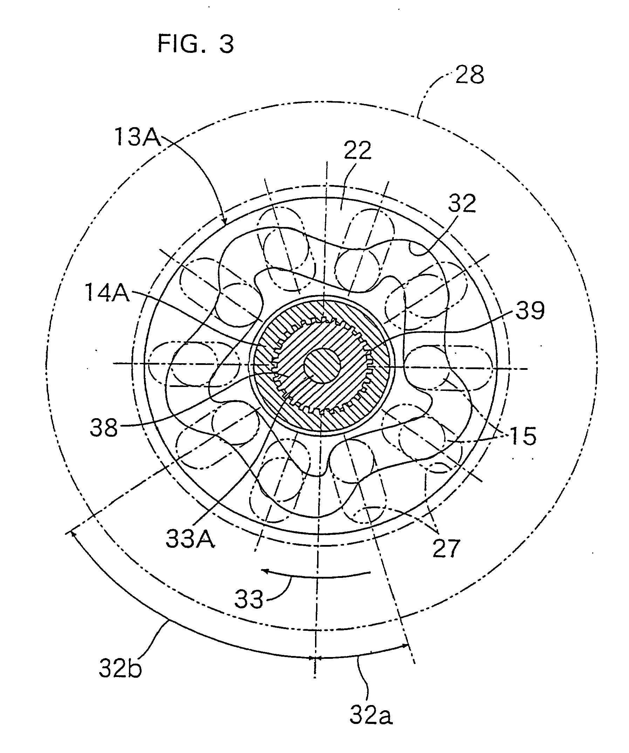

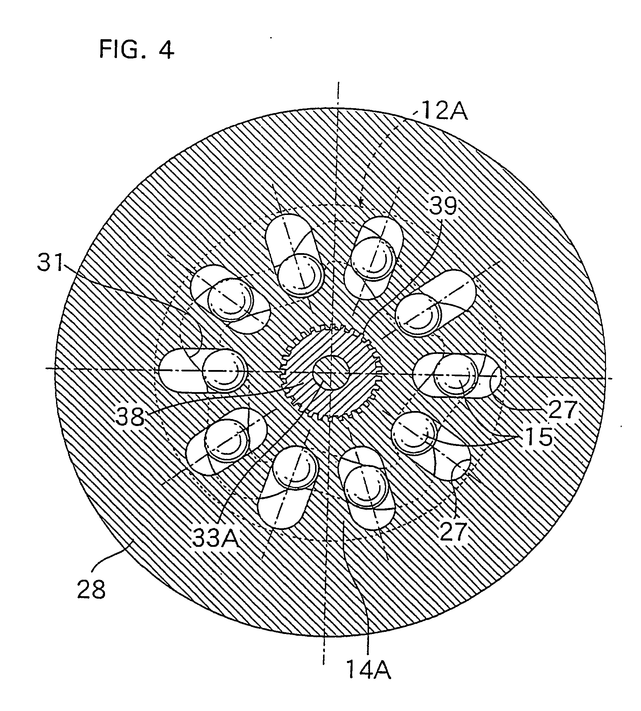

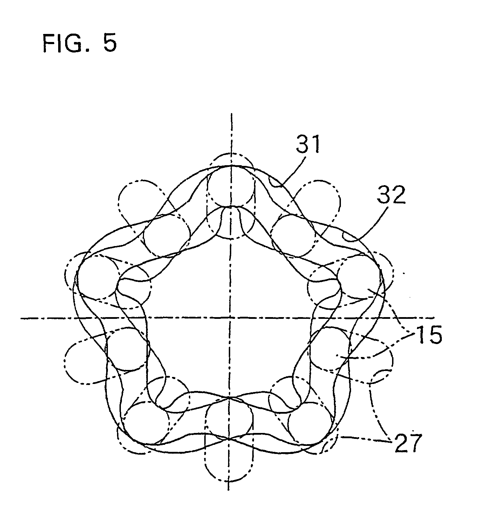

FIGS. 1 through 5 show a first embodiment of the present invention. FIG. 1 is a transverse cross-sectional view of a differential device, FIG. 2 is a cross-sectional view taken along line 2 - 2 of FIG. 1, FIG. 3 is a cross-sectional view taken along line 3 - 3 of FIG. 1, FIG. 4 is a cross-sectional view taken along line 4 - 4 of FIG. 1, and FIG. 5 is a view showing the relative layout of guide holes, rolling bodies, and cam grooves.

As shown in FIG. 1, the differential device has first and second output rotary members 12A, 13A, a disk-shaped holder member 14A disposed between the output rotary members 12A, 13A, and balls 15 as a plurality of rolling bodies held by the holder member 14A and disposed between the output rotary members 12A, 13A.

The first output rotary member 12A is rotatably supported by a differential carrier 16, and the second output rotary member 13A that is disposed coaxially with the first output rotary member 12A is supported by a carrier cover 17 for rotation relative to the first output rotary member 12A. The differential carrier 16 and the carrier cover 17 are fastened to each other by a plurality of bolts 18.

As also shown in FIGS. 2 and 3, the first and second output rotary members 12A, 13A comprise, as respective integral assemblies, disk members 19, 22 disposed coaxially with each other with the holder member 14A interposed therebetween, cylindrical members 20, 23 having proximal ends coaxially joined to central regions of the disk members 19, 22 and extending away from each other, and engaging flanges 21, 24 disposed on inner surfaces of middle portions of the cylindrical members 20, 23. Ball bearings 25, 26 are interposed between the differential carrier 16 and the carrier cover 17.

As also shown in FIG. 4, the disk-shaped holder member 14A which is disposed between the disk members 19, 22 of the first and second output rotary members 12A, 13A has a plurality of radially extending guide holes 27, with balls 15 accommodated respectively in the guide holes 27.

The holder member 14A rotates with the input rotary member 28. In this embodiment, the input rotary member 28 comprises a bevel gear integrally formed with the outer circumference of the holder member 14A. However, the input rotary member 28 may comprise a spur gear, and may be attached to the outer circumference of the holder member 14A.

A gear 29 to which power from an engine (not shown) is transmitted is held in mesh with the input rotary member 28. The gear 29 is rotatably supported on the differential carrier 16 by a ball bearing 30.

The disk members 19, 22 have respective cam grooves 31, 32 defined in their surfaces facing the holder member 14A and extending continuously in the circumferential direction of the disk members 19. 22. The balls 15 held by the holder members 14A engage in the cam grooves 31, 32.

The cam grooves 31, 32 defined in the disk members 19, 22 are such a shape that the balls 15 move reciprocally along the guide holes 27 when a rotational speed difference is developed between the first and second output rotary members 12A, 13A.

As shown in FIG. 2, the cam groove 31 has first guide regions 31a for moving the balls 15 radially outwardly along the guide holes 27 and second guide regions 31b for moving the balls 15 radially inwardly along the guide holes 27 in the direction indicated by the arrow 33 in which the holder member 14A rotates upon transmission of the power from the engine, the first and second guide regions 31a, 31b being joined alternately in the circumferential direction of the disk member 19. As shown in FIG. 3, the cam groove 32 has first guide regions 32a for moving the balls 15 radially outwardly along the guide holes 27 and second guide regions 32b for moving the balls 15 radially inwardly along the guide holes 27 in the direction indicated by the arrow 33, the first and second guide regions 32a, 32b being joined alternately in the circumferential direction of the disk member 22.

In the cam groove 31, the first regions 31a are longer than the second regions 31b in the circumferential direction of the disk member 19. In the cam groove 32, the first regions 32a are shorter than the second regions 32b in the circumferential direction of the disk member 22. This cam groove profile causes the balls 15 to reverse their direction of movement at positions circumferentially displaced from each other in the cam grooves 31, 32. Specifically, as shown in FIG. 5, when the positions for reversing the balls 15 radially outwardly are the same as each other in the cam grooves 31, 32, the positions for reversing the balls 15 radially inwardly are displaced from each other in the cam grooves 31, 32. When the positions for reversing the balls 15 radially inwardly are the same as each other in the cam grooves 31, 32, the positions for reversing the balls 15 radially outwardly are displaced from each other in the cam grooves 31, 32. The cam grooves 31, 32 are thus formed so that all the balls 15 do not reach reversing positions at the same time.

A restrictive shaft 33A which is coaxial with the first and second output rotary members 12A, 13A has opposite ends supported by the first and second output rotary members 12A, 13A. The restrictive shaft 33A limits the first and second output rotary members 12A, 13A against movement away from each other.

The restrictive shaft 33A extends coaxially through the disk members 19, 22 of the first and second output rotary members 12A, 13A and the holder member 14A. The opposite ends of the restrictive shaft 33A are engaged radially inwardly by the engaging flanges 21, 24 of the cylindrical members 20, 23 of the output rotary members 12A, 13A, and are disposed inwardly of distal ends of the cylindrical members 20, 23.

The restrictive shaft 33A extends from the side of the second output rotary member 13A through the cylindrical member 23 and the disk member 22 of the second output rotary member 13A, the holder member 14A, and the cylindrical member 19 and the disk member 20 of the first output rotary member 12A. A split-cotter 34 is mounted on one end of the restrictive shaft 33A engages the engaging flange 21 radially inwardly with the aid of a thrust washer 35, and a restrictive flange 36 integrally formed with the other end of the restrictive shaft 33A engages the engaging flange 24 radially inwardly with the aid of a thrust washer 37.

A cylindrical sleeve 38 is coupled to a central region of the holder member 14A by splines 39. The restrictive shaft 33A extends coaxially through the sleeve 38. Cylindrical bearings 40, 41 are interposed between the sleeve 38 and the first output rotary member 12A, and a cylindrical bearing 42 is interposed between the sleeve 38 and the second output rotary member 13A. Therefore, the holder member 14A is rotatably supported by the output rotary members 12A, 13A.

Drive axles 45, 46 of left and right drive wheels (not shown) of a motor vehicle are coupled by splines 43, 44 to portions of the cylindrical members 20, 23 of the first and second output rotary members 12A, 13A which extend outwardly of the opposite ends of the restrictive shaft 33A. Drive power outputted from the first and second output rotary members 12A, 13A is transmitted from the cylindrical members 20, 23 to the drive axles 45, 46.

A disc spring 47 is interposed between a central region of the disk member 19 of the first output rotary member 12A and a central region of the holder member 14A. The first and second output rotary members 12A, 13A and the holder member 14A are prevented from axially wobbling under spring forces produced by the disc spring 47.

Operation of the differential device according to the first embodiment will be described below. Rotational power of the holder member 14A that rotates with the input rotary member 28 is transmitted by the balls 15 held by the holder member 14A to the cam grooves 31, 32 in the first and second output rotary members 12A, 13A, which are rotated with the input rotary member 28.

If a rotational speed difference is developed between the left and right drive wheels as when the motor vehicle makes a turn, then the balls 15 roll and move reciprocally in the guide holes 27, allowing the left and right drive wheels to rotate at different rotational speeds. The balls 15 apply axial reactive forces to the cam grooves 31, 32 causing the first and second output rotary members 12A, 13A to be borne by the opposite ends of the restrictive shaft 33A via the thrust washers 35, 37. The opposite ends of the restrictive shaft 33A and the first and second output rotary members 12A, 13A produce frictional forces therebetween, generating rotation resisting forces that serve as differential limiting forces.

In the differential device, the restrictive shaft 33A that limits the first and second output rotary members 12A, 13A against movement away from each other have its axially opposite ends supported by the first and second output rotary members 12A, 13A and is disposed coaxially with the output rotary members 12A, 13A. Consequently, a conventional case which would be disposed in covering relation to the first and second output rotary members 12A, 13A is not required. The differential device is thus of a compact size, a small weight, and a low cost. As sliding surfaces in the differential device are not covered, oil can easily be supplied to the sliding surfaces.

The first and second output rotary members 12A, 13A comprise, as respective integral assemblies, the disk members 19, 22 having the cam grooves 31, 32, respectively, and disposed coaxially with each other with the holder member 14A interposed therebetween, the cylindrical members 20, 23 having proximal ends coaxially joined to central regions of the disk members 19, 22 and extending away from each other, and the engaging flanges 21, 24 disposed on inner surfaces of middle portions of the cylindrical members 20, 23. The restrictive shaft 33A extends coaxially through the holder member 14A and the disk members 19, 22 and has its opposite ends engaged radially inwardly by the engaging flanges 21, 24 and disposed inwardly of distal ends of the cylindrical members 20, 23.

Therefore, the drive axles 45, 46 can be coupled to the distal ends of the cylindrical members 20, 23. Thus, the cylindrical members 20, 23 can be used in the same manner as the output shafts of conventional differential devices, and hence are compatible for attachment with the conventional differential devices.

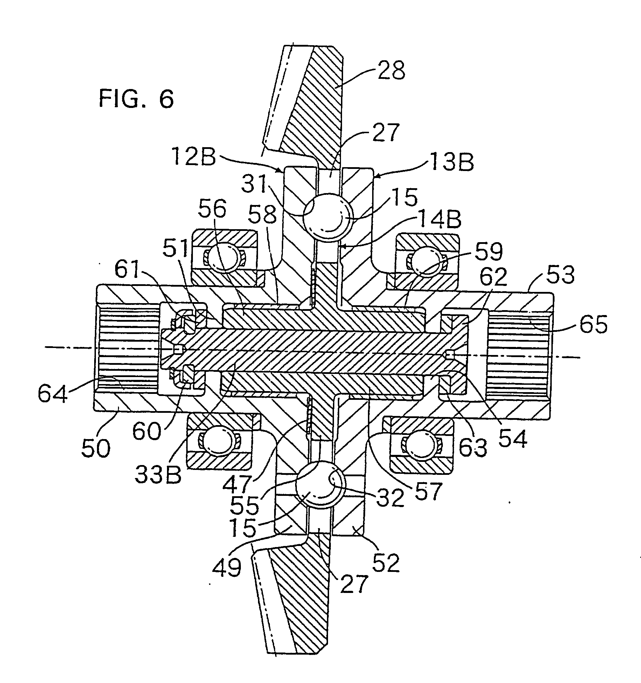

FIG. 6 shows a differential device according to a second embodiment of the present invention. The differential device according to the second embodiment has first and second output rotary members 12B, 13B, a holder member 14B disposed between the output rotary members 12B, 13B, and a plurality of balls 15 held by the holder member 14B and disposed between the output rotary members 12B, 13B.

The first and second output rotary members 12B, 13B comprise, as respective integral assemblies, disk members 49, 52 disposed coaxially with each other with the holder member 14B interposed therebetween, cylindrical members 50, 53 having proximal ends coaxially joined to central regions of the disk members 49, 52 and extending away from each other, and engaging flanges 51, 54 disposed on inner surfaces of middle portions of the cylindrical members 50, 53.

The holder member 14B comprises a disk-shaped main body 55 disposed between the disk members 49, 52 of the first and second output rotary members 12B, 13B, and a pair of cylindrical support tubes 56, 57 having proximal ends coaxially and integrally joined to opposite surfaces of a central region of the main body 55. The input rotary member 28 is integrally formed with the outer circumference of the main body 55, which has the radially extending guide holes 27 defined therein. The balls 15 are accommodated respectively in the guide holes 27, and engage in the cam grooves 31, 32 that are defined in the disk members 49, 52 of the first and second output rotary members 12B, 13B. The cylindrical support tubes 56, 57 are inserted in the cylindrical members 50, 53, respectively, between the engaging flanges 51, 54 of the first and second output rotary members 12B, 13B.

Cylindrical bearings 58, 59 are interposed between the support tubes 56, 57 and the cylindrical members 50, 53. The holder member 14B is rotatably supported by the output rotary members 12B, 13B.

A restrictive shaft 33B which is coaxial with the first and second output rotary members 12B, 13B has opposite ends supported by the first and second output rotary members 12B, 13B. The restrictive shaft 33B limits the first and second output rotary members 12B, 13B against movement away from each other.

The restrictive shaft 33B extends coaxially through the disk members 49, 52 of the first and second output rotary members 12B, 13B and the holder member 14B. The opposite ends of the restrictive shaft 33B are engaged radially inwardly by the engaging flanges 51, 54 of the cylindrical members 50, 53 of the output rotary members 12B, 13B, and are disposed inwardly of distal ends of the cylindrical members 50, 53.

The restrictive shaft 33B extends from the side of the second output rotary member 13B through the cylindrical member 53 and the disk member 52 of the second output rotary member 13B, the holder member 14B, and the cylindrical member 49 and the disk member 50 of the first output rotary member 12B. A split-cotter 60 is mounted on one end of the restrictive shaft 33B engages the engaging flange 51 radially inwardly with the aid of a thrust washer 61, and a restrictive flange 62 integrally formed with the other end of the restrictive shaft 33B engages the engaging flange 54 radially inwardly with the aid of a thrust washer 63.

Spline grooves 64, 65 for connection to the drive axles of left and right drive wheels are defined in inner surfaces of the cylindrical members 50, 53 of the first and second output rotary members 12B, 13B which extend outwardly of the ends of the restrictive shaft 33B.

A disc spring 47 is interposed between a central region of the disk member 49 of the first output rotary member 12B and a central region of the holder member 14B.

In the second embodiment, a conventional case which would be disposed in covering relation to the first and second output rotary members 12B, 13B is not required. The differential device is thus of a compact size, a small weight, and a low cost. As sliding surfaces in the differential device are not covered, oil can easily be supplied to the sliding surfaces. Therefore, the drive axles can be coupled to the distal ends of the cylindrical members 50, 53 of the first and second output rotary members 12B, 13B. Thus, the cylindrical members 50, 53 are compatible for attachment with the conventional differential devices.

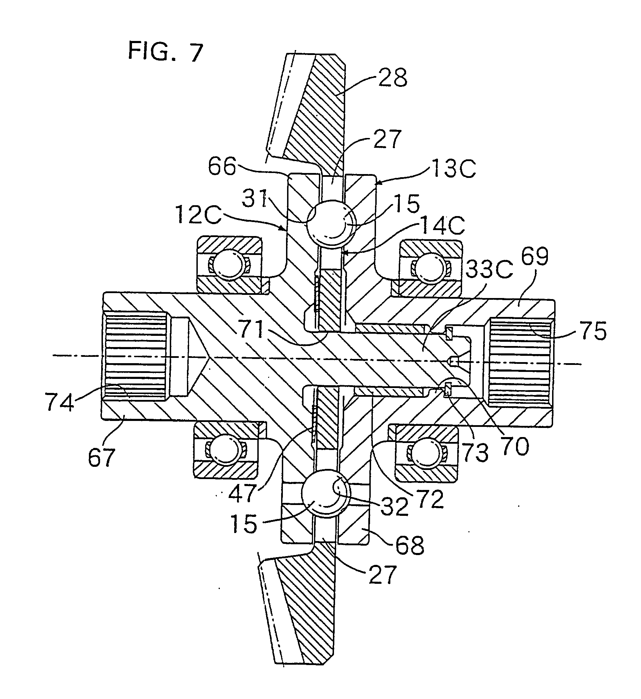

FIG. 7 shows a differential device according to a third embodiment of the present invention. The differential device according to the third embodiment has first and second output rotary members 12C, 13C, a disk-shaped holder member 14C disposed between the output rotary members 12C, 13C, and a plurality of balls 15 held by the holder member 14C and disposed between the output rotary members 12C, 13C.

The first and second output rotary members 12C, 13C comprise disk members 66, 68 disposed coaxially with each other with the holder member 14C interposed therebetween, and cylindrical members 67, 69 having proximal ends coaxially joined to central regions of the disk members 66, 68 and extending away from each other. The cylindrical member 67 is of a bottomed cylindrical shape closed on the side of the disk member 66. The cylindrical member 69 is open at its opposite ends and has an engaging flange 70 integrally formed with and extending radially inwardly from an inner surface of a middle portion thereof.

The holder member 14C is of a disk shape having a through hole 71 defined centrally therein. The input rotary member 28 is integrally formed with the outer circumference of the holder member 14C, which has the radially extending guide holes 27 defined therein. The balls 15 are accommodated respectively in the guide holes 27, and engage in the cam grooves 31, 32 that are defined in the disk members 66, 68 of the first and second output rotary members 12C, 13C.

A restrictive shaft 33C has an end integrally and coaxially joined to a central region of the first output rotary member 12C. The restrictive shaft 33C extends in the second output rotary member 13C with a cylindrical bearing 72 interposed between the restrictive shaft 33C and the cylindrical member 69. A retaining ring 73 engages the engaging flange 70 radially inwardly, and is mounted on the other end of the restrictive shaft 33C. Specifically, the restrictive shaft 33C whose one end is integrally and coaxially joined to the first output rotary member 12C has its opposite end inserted and supported for relative rotation in the second output rotary member 13C, and engaged radially inwardly by the second output rotary member 13C.

Spline grooves 74 for connection to a drive axle are defined in an inner surface of the cylindrical member 67 of the first output rotary member 12C, and spline grooves 75 for connection to a drive axle are defined in an inner surface of the cylindrical member 69 of the second output rotary member 13C which extends outwardly of the other end of the restrictive shaft 33C.

A disc spring 47 is interposed between a central region of the disk member 66 of the first output rotary member 12C and a central region of the holder member 14C.

The differential device according to the third embodiment offers the same advantages as those of the differential devices according to the first and second embodiments. In addition, the number of parts used is reduced because the restrictive shaft 33C is integral with the second output rotary member 12C.

While the embodiments of the present invention have been described above, the present invention is not limited to the above embodiments, but various design changes can be made with departing from the invention as defined in the scope of claims for patent.

For example, a restrictive shaft may be integrally formed with the holder member so as to project coaxially from the opposite surfaces of the central region of the holder member. With this arrangement, the number of parts used is reduced.

In summary it is an object to provide a differential device having a pair of output rotary members, a holder member having a plurality of radially extending guide holes and disposed between the output rotary members, and a plurality of rolling bodies accommodated respectively in the guide holes, disposed between the output rotary members, and engaging in cam grooves defined in the output rotary members, the differential device requiring no case for limiting output rotary members against movement away from each other, being of a compact size, a small weight, and a low cost, and making it easy to supply oil to sliding surfaces.

To achieve this, a restrictive shaft 33A for limiting the output rotary members 12A, 13A against axial movement away from each other is disposed coaxially with the output rotary members 12A, 13A and has axially opposite ends supported by the output rotary members 12A, 13A.

## Claims

1. A differential device having a pair of output rotary members (12A, 13A; 12B, 13B; 12C, 13C) rotatable about one axis with respect to each other, a holder member (14A, 14B, 14C) disposed between the output rotary members (12A, 13A; 12B, 13B; 12C, 13C) for rotation with an input rotary member (28) and having a plurality of radially extending guide holes (27), and a plurality of rolling bodies (15) accommodated respectively in said guide holes (27) and disposed between said output rotary members (12A, 13A; 12B, 13B; 12C, 13C), said output rotary members (12A, 13A; 12B, 13B; 12C, 13C) having cam grooves (31, 32) continuously extending in the circumferential direction of the output rotary members (12A, 13A; 12B, 13B; 12C, 13C), said rolling bodies (15) engaging in said cam grooves (31, 32), said cam grooves (31, 32) being of such a shape that said rolling bodies (15) move reciprocally along said guide holes (27) when a rotational speed difference is developed between the output rotary members (12A, 13A; 12B, 13B; 12C, 13C), **characterized in that** a restrictive shaft (33A, 33B, 33C) for limiting said output rotary members (12A, 13A; 12B, 13B; 12C, 13C) against axial movement away from each other is disposed coaxially with the output rotary members (12A, 13A; 12B, 13B; 12C, 13C) and has axially opposite ends supported by said output rotary members (12A, 13A; 12B, 13B; 12C, 13C).

2. A differential device according to claim 1, **characterized in that** said output rotary members (12A, 13A; 12B, 13B; 12C, 13C) comprise, as respective integral assemblies, disk members (19, 22; 49, 52) having said cam grooves (31, 32), respectively, and disposed coaxially with each other with said holder member (14A - 14C) interposed therebetween, cylindrical members (20, 23; 50, 53) having proximal ends coaxially joined to central regions of said disk members (19, 22; 49, 52) and extending away from each other, and engaging flanges (21, 24; 51, 54) disposed on inner surfaces of middle portions of said cylindrical members (20, 23; 50, 53), said restrictive shaft (33A, 33B, 33C) extending coaxially through said holder member (14A, 14B) and said disk members (19, 22; 49, 52) and having opposite ends engaged radially inwardly by said engaging flanges (21, 24; 51, 54) and disposed inwardly of distal ends of said cylindrical members (20, 23; 50, 53).

3. A differential device according to claim 1, **characterized in that** said restrictive shaft (33C) has an end integrally and coaxially joined to one (12C) of said output rotary members (12C, 13C) and an opposite end inserted and supported relatively rotatably in the other (13C) of said output rotary members (12C, 13C) and engaged radially inwardly by said other output rotary member (13C).

## Patentansprüche

1. Differentialvorrichtung mit einem Paar von Ausgangsdrehelementen (12A, 13A; 12B, 13B; 12C, 13C), welche um eine Achse zueinander drehbar sind, mit einem Halteelement (14A, 14B, 14C), welches zwischen den Ausgangsdrehelementen (12A, 13A; 12B, 13B; 12C, 13C) zur Drehung mit einem Eingangsdrehelement (28) angeordnet ist und eine Mehrzahl von radial verlaufenden Führungslöchern (27) aufweist, sowie mit einer Mehrzahl von Rollkörpern (15), die jeweils in den Führungslöchern (27) aufgenommen sind und die zwischen den Ausgangsdrehelementen (12A, 13A; 12B, 13B; 12C, 13C) angeordnet sind, wobei die Ausgangsdrehelemente (12A, 13A; 12B, 13B; 12C, 13C) Nockennuten (31, 32) aufweisen, die kontinuierlich in der Umfangsrichtung der Ausgangsdrehelemente (12A, 13A; 12B; 13B; 12C, 13C) verlaufen, wobei die Rollkörper (15) in die Nockennuten (31, 32) eingreifen, wobei die Nockennuten (31, 32) eine solche Form aufweisen, dass sich die Rollkörper (15) entlang der Führungslöcher (27) hin und her bewegen, wenn sich eine Drehzahldifferenz zwischen den Ausgangsdrehelementen (12A, 13A; 12B, 13B; 12C, 13C) entwickelt, **dadurch gekennzeichnet, dass** eine Begrenzungswelle (33A, 33B, 33C) zum Begrenzen der Ausgangsdrehelemente (12A, 13A; 12B, 13B; 12C, 13C) gegenüber axialer Bewegung voneinander weg koaxial mit den Ausgangsdrehelementen (12A, 13A; 12B, 13B; 12C, 13C) angeordnet ist und axial entgegengesetzte Enden aufweist, die durch die Ausgangsdrehelemente (12A, 13A; 12B, 13B; 12C; 13C) gelagert sind.

2. Differentialvorrichtung nach Anspruch 1, **dadurch gekennzeichnet, dass** die Ausgangsdrehelemente (12A, 13A; 12B, 13B; 12C; 13C) als jeweilige integrale Anordnungen Scheibenelemente (19, 22; 49, 52) umfassen, die jeweils die Nockennuten (31, 32) aufweisen und die koaxial zueinander angeordnet sind, wobei das Halteelement (14A-14C) dazwischen angeordnet ist, zylindrische Elemente (20, 23; 50, 53) umfassen, welche proximale Enden aufweisen, die koaxial mit mittleren Bereichen der Scheibenelemente (19, 22; 49, 52) verbunden sind und die voneinander weg verlaufen, und Eingriffsflansche (21, 24; 51, 54) umfassen, die an Innenflächen von mittleren Abschnitten der zylindrischen Elemente (20, 23; 50, 53) angeordnet sind, wobei die Begrenzungswelle (33A, 33B, 33C) koaxial durch das Halteelement (14A, 14B) und die Scheibenelemente (19, 22; 49, 52) verläuft und entgegengesetzten Enden aufweist, die radial nach innen durch die Eingriffsflansche (21, 24; 51, 54) in Eingriff genommen sind und die innerhalb von distalen Enden der zylindrischen Elemente (20, 23; 50, 53) angeordnet sind.

3. Differentialvorrichtung nach Anspruch 1, **dadurch gekennzeichnet, dass** die Begrenzungswelle (33C) ein ein Ende aufweist, welches integral und koaxial mit einem (12C) der Ausgangsdrehelemente (12C, 13C) verbunden ist, und ein entgegengesetztes Ende aufweist, welches relativ in dem anderen (13C) der Ausgangsdrehelemente (12C, 13C) eingeführt und drehbar gehalten ist, und welches radial nach innen durch das andere Ausgangsdrehelement (13C) in Eingriff genommen ist.

## Revendications

1. Mécanisme différentiel comprenant une paire d'organes rotatifs de sortie (12A, 13A ; 12B, 13B ; 12C, 13C) susceptibles de tourner autour d'un axe par rapport à chaque autre, un organe support (14A, 14B, 14C), disposé entre les organes rotatifs de sortie (12A, 13A ; 12B, 13B ; 12C, 13C) pour tourner avec un organe rotatif d'entrée (28) et ayant une pluralité de trous de guidage (27) s'étendant radialement, et une pluralité de corps de roulement (15), logés respectivement dans lesdits trous de guidage (27) et disposés entre lesdits organes rotatifs de sortie (12A, 13A ; 12B, 13B ; 12C, 13C), lesdits organes rotatifs de sortie (12A, 13A ; 12B, 13B ; 12C, 13C) ayant des gorges formant cames (31, 32) s'étendant de façon continue dans la direction circonférentielle des organes rotatifs de sortie (12A, 13A ; 12B, 13B ; 12C, 13C), lesdits corps de roulement (15) venant en prise dans lesdites gorges formant cames (31, 32), lesdites gorges formant cames (31, 32) étant d'une forme telle que lesdits corps de roulement (15) se déplacent en va-et-vient le long desdits trous de guidage (27) lorsqu'une différence de vitesse de rotation est développée entre les organes rotatifs de sortie (12A, 13A ; 12B, 13B ; 12C, 13C), **caractérisé en ce qu'**un arbre de limitation (33A, 33B, 33C), devant limiter lesdits organes rotatifs de sortie (12A, 13A ; 12B, 13B ; 12C, 13C) contre tout déplacement axial dans le sens de l'écartement mutuel, est disposé coaxialement aux organes rotatifs de sortie (12A, 13A ; 12B, 13B ; 12C, 13C) et présente des extrémités axialement opposées, supportées par lesdits organes rotatifs de sortie (12A, 13A ; 12B, 13B ; 12C, 13C).

2. Mécanisme différentiel selon la revendication 1, **caractérisé en ce que** lesdits organes rotatifs de sortie (12A, 13A ; 12B, 13B ; 12C, 13C) comprennent, en tant qu'ensembles monoblocs respectifs, des organes discoïdes (19, 22 ; 49, 52) comprenant lesdites gorges formant cames (31, 32), respectivement, et disposés coaxialement les uns par rapport aux autres, ledit organe support de montage (14A à 14C) étant disposé entre eux, des organes cylindriques (20, 23 ; 50, 53) ayant des extrémités proximales, reliées coaxialement aux régions centrales desdits organes discoïdes (19, 22 ; 49, 52) et s'étendant en s'écartant les unes des autres, et des brides de mise en prise (21, 24 ; 51, 54) disposées sur des surfaces intérieures de parties médianes desdits organes cylindriques (20, 23 ; 50, 53), ledit arbre de limitation (33a, 33B, 33C) s'étendant coaxialement, à travers ledit organe support (14A, 14B) et lesdits organes discoïdes (19, 22 ; 49, 52), et ayant des extrémités opposées, avec lesquelles viennent en prise radialement extérieurement lesdites brides de mise en prise (21, 24 ; 51, 54) et disposées à l'intérieur des extrémités distales desdits organes cylindriques (20, 23 ; 50, 53).

3. Mécanisme différentiel selon la revendication 1, **caractérisé en ce que** ledit arbre de limitation (33C) présente une extrémité reliée d'une seule pièce et coaxialement à l'un (12C) desdits organes rotatifs de sortie (12C, 13C), et une extrémité opposée, insérée et supportée avec possibilité de rotation relative dans l'autre (13C) desdits organes rotatifs de sortie (12C, 13C) et mise en prise radialement vers l'intérieur par ledit autre organe rotatif de sortie (13C).
